# EUROPEAN PATENT APPLICATION

(11) **EP 2 725 723 A1**
(43) Date of publication of application: **30.04.2014**
(21) Application number: 12306319.0
(22) Date of filing: 24.10.2012
(51) Int. Cl.: H04B 7/26, H04L 5/14, H04L 5/00

(54) **Apparatus and method for offering a hybrid TDD/FDD duplexing technology**

(71) Applicant: Alcatel Lucent, 75007 Paris (FR)
(72) Inventor: Doetsch, Uwe, 74392 Freudental (DE); Braun, Volker, 70176 Stuttgart (DE)
(74) Representative: 2SPL Patentanwälte

(57) **Abstract**

Embodiments provide an apparatus, a base station transceiver, a mobile station transceiver, a method, and a computer program for communicating in a wireless system. The apparatus (10) comprises means for transmitting (12) radio signals on a first carrier during a first time interval and for transmitting radio signals on a second carrier during a second time interval. The apparatus (10) further comprises means for receiving (14) radio signals on the second carrier during the first time interval and for receiving radio signals on the first carrier during the second time interval.

## Description

Embodiments relate to data transmission and reception, more particularly but not exclusively to duplex communication in a wireless or mobile communication system.

### Background

Demands for higher data rates for mobile services are steadily increasing. At the same time modem mobile communication systems as 3rd Generation systems (3G) and 4th Generation systems (4G) provide enhanced technologies, which enable higher spectral efficiencies and allow for higher data rates and cell capacities. The demands are growing for both directions of transmission, i.e. for the DownLink (DL), i.e. for transmission from the network infrastructure to a mobile transceiver, as well as in the UpLink (UL), i.e. in the direction from a mobile transceiver to the network infrastructure.

In most of the conventional mobile access networks two operation modes are used. Frequency Division Duplex (FDD) uses a paired spectrum with one spectral region or bandwidth for UL and another spectral region or bandwidth for DL transmission. Time Division Duplex (TDD) uses one piece of spectrum, one spectral region or bandwidth for UL and DL transmission. The availability of spectrum is probably one of the most important criteria for choosing the mode to be used.

Related to the duplex mode there are advantages and disadvantages for both, FDD and TDD, respectively. One major difference of the two operation modes is the feedback generation. In FDD the channel information can be measured by the mobile and then transmitted to the base station. Depending on the transmission mode such feedback requires a lot of UL transmission resources. In other words, the more feedback provided in the UL, the more exactly the adjustments of the transmission in the DL based on the feedback, i.e. the higher the efficiency of the DL transmission and the lower the efficiency in the UL. For the TDD mode there is another option due to the reciprocity of the channel in DL and UL. In other words, if the switching between UL and DL transmission is carried out faster than the coherence length of the radio channel, then a valid assumption can be made that the radio channel is the same for both directions. In this case the UL transmission can be used by the base station to derive channel state information for DL transmission.

### Summary

It is a finding that in future communication systems advanced transmission and reception modes will be used, such as Multiple-Input-Multiple-Output (MIMO), beamforming, Cooperative Multi-Point-transmission (CoMP), etc. The performance improvement of these schemes depends strongly on the quality of the channel state information at the involved transceivers, i.e. at a base station transceiver or a mobile transceiver, respectively. This is because in these schemes the transmit signals are commonly multiplied by pre-coding coefficients that in turn are derived from channel state information. In an FDD system feedback with enough resolution, i.e. data rate, may consume a high overhead in the UL or will result in lower efficiency or performance, although compression algorithms may be used to reduce the required amount of UL resources. On the other hand, simulation results have been found that show higher performance gains for beamforming and CoMP schemes for TDD than for FDD, which is due to the channel reciprocity and the better channel quality information available at the transmitter in TDD.

It is another finding that a disadvantage of pure TDD can be that Round-Trip Times (RTT), e.g. times obtained by ping-measurements, may be somewhat higher as compared to FDD. Furthermore, TDD may have more jitter, as data packets may have to wait for the next switch over point in the TDD scheme until the next transmission can start. In a Long Term Evolution (LTE) system with symmetric UL/DL configurations this would amount to about 5ms extra RTT as compared to FDD. One further finding of embodiments is that the feedback availability in a system with paired spectrum can be improved by introducing a TDD component.

Hence, embodiments are based on the finding that a TDD mode can be introduced for a paired spectrum, which normally would run in a FDD mode. By switching the carrier of the uplink and the downlink after a certain time frame, the advantages of both modes may be combined by embodiments.

The feedback generation may be a hybrid approach using a measurement of a user or mobile transceiver and using the information coming from the uplink transmission. This reduces the feedback data, which is exchanged between base station and User Equipment (UE) and increases the performance gain of the modes like CoMP, and beamforming.

Embodiments may provide an apparatus for communicating in a wireless communication system. Such an apparatus may be comprised or included in a base station transceiver and/or a mobile transceiver of said mobile communication system. Such apparatuses may be referred to as base station transceiver apparatus or mobile transceiver apparatus, respectively. The mobile communication system may, for example, correspond to one of the mobile communication systems standardized by the 3^{rd} Generation Partnership Project (3GPP), as Global System for Mobile Communications (GSM), Enhanced Data rates for GSM Evolution (EDGE), GSM EDGE Radio Access Network (GERAN), High Speed Packet Access (HSPA), Universal Terrestrial Radio Access Network (UTRAN) or Evolved UTRAN (E-UTRAN), Long Term Evolution (LTE) or LTE-Advanced (LTE-A), or mobile communication systems with different standards, e.g. Worldwide Interoperability for Microwave Access (WIMAX) IEEE 802.16 or Wireless Local Area Network (WLAN) IEEE 802.11, generally any system based on Time Division Multiple Access (TDMA), Frequency Division Multiple Access (FDMA), Orthogonal Frequency Division Multiple Access (OFDMA), Code Division Multiple Access (CDMA), etc. In the following the terms mobile communication system and mobile communication network are used synonymously.

The mobile communication system may comprise a plurality of transmission points or base station transceivers operable to communicate radio signals with a mobile transceiver. In embodiments, the mobile communication system may comprise mobile transceivers and base station transceivers. A mobile transceiver may correspond to a smartphone, a cell phone, user equipment, a laptop, a notebook, a personal computer, a Personal Digital Assistant (PDA), an Universal Serial Bus (USB) -stick, a car, etc. A mobile transceiver may also be referred to as UE or user in line with the 3GPP terminology. A base station transceiver can be located in the fixed or stationary part of the network or system. A base station transceiver may correspond to a remote radio head, a transmission point, an access point, a macro cell, a small cell, a micro cell, a femto cell, a metro cell etc. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a BTS, an access point, etc.

The mobile communication system may thus be cellular. The term cell refers to a coverage area of radio services provided by a transmission point, a remote unit, a remote head, a remote radio head, a base station transceiver or a NodeB, an eNodeB, respectively. In some embodiments a cell may correspond to a sector. For example, sectors can be achieved using sector antennas, which provide a characteristic for covering an angular section around a base station transceiver. In some embodiments, a base station transceiver may, for example, operate three or six cells covering sectors of 120° (in case of three cells), 60° (in case of six cells) respectively. A mobile transceiver can be registered or associated with a cell, i.e. it can be associated to a cell such that data can be exchanged between the network and the mobile in the coverage area of the associated cell using a dedicated channel, link or connection.

The apparatus further comprises means for transmitting radio signals on a first carrier during a first time interval and for transmitting radio signals on a second carrier during a second time interval. The means for transmitting can correspond to a transmitter, e.g. in line with one or more of the above communication systems. For example, the means for transmitting can be implemented as software which is operable to be run on according hardware such as a Digital Signal Processor (DSP), a controller, a Central Processing Unit (CPU), etc. Hence, in some embodiments the means for transmitting may provide a transmit signal, which is then converted from a base band to a transmission band before being transmitted. In some embodiments the means for transmitting may hence comprise typical transmitter components such as one or more antennas, one or more filters, one or more power amplifiers, high frequency processing means, a mixer, a converter etc. Moreover, the first and the second carriers may correspond to frequency carriers having different radio frequencies. On each carrier a certain system bandwidth may be available. In some embodiments the same bandwidth may be available on each of the carriers. In some other embodiments different bandwidths may be available on the different carriers. Moreover, the carriers may be directly adjacent to each other in the spectrum in some embodiments. In other embodiments the carriers may be located at different frequencies such that they are non-adjacent. In some embodiments the carriers may even partly overlap.

Furthermore, in some embodiments the first and the second time intervals may correspond to slots, radio frames, sub-frames, Time Transmission Intervals (TTIs), symbols, etc. The first and the second time intervals may be directly adjacent to each other, i.e. in some embodiments there may not be a gap between the two time intervals. In other embodiments the first and the second time intervals may be non-adjacent, i.e. there may be a gap in between. In yet another embodiment the time intervals may even partly overlap.

The apparatus further comprises means for receiving radio signals on the second carrier during the first time interval and for receiving radio signals on the first carrier during the second time interval. The means for receiving may correspond to a receiver, which is compliant with one of the above communication systems or communication standards. In other words, in embodiments the means for receiving or the receiver may be operable to receive one or more receive symbols. The means for receiving or the receiver may comprise typical receiver components such as one or more receive antennas, one or more low-noise amplifiers, one or more filter circuits or filter means, etc. In further embodiments, the receiver may even comprise a mixer for converting a receive signal or symbol from the transmission band to the base band and according base band processing means. For example, the receiver may comprise a Digital Signal Processor (DSP) for processing receive symbols or receive signals in the baseband, after they have been downconverted from the transmission band and digitized. A receive symbol is based on a transmit symbol transmitted by a transmitter or another transceiver.

In other words, embodiments may support TDD operation in carriers 1 and 2 and may allow carrier-aggregation across the carriers 1 and 2. That is to say, in embodiments the means for transmitting and the means for receiving can be operable in a TDD mode and in an FDD mode. In some embodiments the means for transmitting can be operable to switch between transmission on the first carrier and transmission on the second carrier. That is to say that in some embodiments the means for transmitting may transmit either on the first carrier or on the second carrier. Moreover, in some embodiments the means for receiving is operable to switch between receiving on the first carrier and receiving on the second carrier. That is to say that in some embodiments the means for receiving may receive either on the first carrier or on the second carrier.

In some embodiments the apparatus can be operable to switch between transmitting radio signals on at least one of the first or second carriers using the means for transmitting and receiving radio signals on the at least one of the first or second carriers using the means for receiving. In other words, within one carrier the apparatus can be operable to switch between transmitting and receiving. That is to say, that the apparatus may not receive and transmit on the same subcarrier simultaneously. The apparatus may be further operable to introduce a time gap or a time shift, in which radio signals are neither received nor transmitted, when switching from transmitting to receiving or when switching from receiving to transmitting. In other words, in some embodiments it is possible to introduce a gap or time shift, i.e. a time period of silence, when switching between transmitting and receiving.

In embodiments, the gap or time shift may only be introduced when switching in one direction, e.g. when switching from transmitting to receiving, e.g. in a base station transceiver apparatus. In other embodiments the gap or time shift may be introduced when switching in the other direction, e.g. when switching from receiving to transmitting, i.e. in a mobile transceiver apparatus. Moreover, in some embodiments the time shift between carrier 1 and 2 may be configurable. In other words, time gaps or shifts may be introduced on each of the carriers and they may be configurable, i.e. they can be different or the same. Moreover, the switching may be configurable or adjustable, too. Hence, the allocation of UL and DL time intervals or sub-frames may be configurable and asymmetric allocations can be supported.

In other words, in embodiments the carrier aggregation case may allow transmission from a base station to a user or mobile transceiver (DL) without interrupts by alternately transmitting on both carriers. In the UL alternating transmission on both carriers may be carried out by the user or mobile transceiver. Hence, in some embodiments RTT may be reduced to values known from FDD systems. Here and in the following the RTT or the HARQ RTT can be interpreted as the time between a first transmission of a payload data packet and a retransmission of or for the data packet. In some embodiments the RTT may be determined on the applications layer, e.g. using ping measurements.

With Hybrid Automatic Retransmission request (HARQ), the positive and Negative ACKnowledgement (ACK/NACK) in response to transmission on carrier 1 may be transmitted on carrier 1 or carrier 2, so as to enable timely ACK/NACK reporting. In other words, the means for receiving can be operable to receive a payload data packet on the first carrier and the means for transmitting can be operable to transmit an acknowledgement data packet associated with the payload data packet on the second carrier. Furthermore, the means for transmitting may be operable to transmit a payload data packet on the first carrier and the means for receiving can be operable to receive an acknowledgement data packet associated with the payload data packet on the second carrier. Moreover, in some embodiments the acknowledgement data packet can be transmitted in shortened sub-frames, such as Uplink/Downlink Pilot Time Slots (DwPTS, UpPTS), used to realize a time duplex transmission gap, i.e. a gap in a special sub-frame. DwPTS and UpPTS may correspond to shortened sub-frames, which may comprise pilot symbols, control signaling, Random Access CHannel (RACH) preambles, and/or data.

In further embodiments the apparatus may comprise further means for estimating a radio channel between the apparatus and another transceiver of the wireless communication system. The means for estimating may correspond to channel estimator. The channel estimator can be implemented as signal processing means, e.g. as software operable to be run or executed on according hardware such as a DSP, a CPU etc. The channel estimator or the means for estimating may estimate the radio channel between the apparatus and another transceiver, e.g. an estimate is obtained, for example, in terms of a complex valued base band representation of the radio channel. Moreover, a quality measure for the radio channel may be obtained, e.g. a receive power, Channel Quality Information (CQI), Channel State Information (CSI), a Signal-to-Noise Ratio (SNR), a Signal-to-Noise-and-Interference Ratio (SINR), a Reference Signal Receive Power (RSRP), a Receive Signal Code Power (RSCP), etc.

In some embodiments the means for estimating can be operable to determine a transmit quality measure, e.g. a precoding coefficient, for a radio channel of the first or the second carrier by determining a quality measure of a received reference symbol. Hence in some embodiments channel reciprocity may be exploited. In such an embodiment the switching between transmission and reception on a respective carrier may be carried out in a time period, which is shorter than the coherence time of the radio channel. This may validate the assumption that the radio channel does not change within a switching cycle. Hence, in such an embodiment the channel estimate and a quality measure associated therewith may be determined from a received reference or pilot symbol and then applied to the next transmission cycle as well. In further embodiments, the means for estimating can be operable to determine a transmit quality measure for a radio channel of the first or the second carrier by receiving quality information from the other transceiver. Hence, reference or pilot symbols may be transmitted allowing a receiver to estimate the radio channel. The receiver may then provide according quality or channel estimation information to the transmitter of the pilot or reference symbol.

Embodiments may, for example, be used in a 4G+ or a potential 5-Generation (5G) system. In LTE rel. 12/13 embodiments may be introduced in spectrum, which may not be backward compatible to Rel. 8-10 users. Embodiments may allow some enhanced options to improve the performance of a system and to standardize new and more efficient feedback generation modes.

Embodiments further provide a base station transceiver or a relay station transceiver of a wireless communication system comprising the above described apparatus. A relay station transceiver may correspond to an intermediate network node in the communication path between a base station transceiver and a mobile station transceiver. A relay station transceiver may forward a signal received from a mobile transceiver to a base station transceiver, signals received from the base station transceiver to the mobile station transceiver, respectively. Embodiments further provide a mobile transceiver of a wireless communication system comprising the above-described apparatus.

Embodiments may further provide a system comprising a macro cell base station transceiver with the above-described apparatus and a small cell base station transceiver with the above described apparatus. The small cell base station transceiver may be located in the coverage area of the macro cell base station transceiver. The macro cell base station transceiver can be operable to switch between transmitting radio signals on at least one of the first or second carriers using the means for transmitting and receiving radio signals on the at least one of the first or second carriers using the means for receiving. The small cell base station transceiver can be operable to switch between transmitting radio signals on at the least one of the first or second carriers using the means for transmitting and receiving radio signals on the at least one of the first or second carriers using the means for receiving. In other words, the macro cell base station transceiver uses the same radio resources for communicating with macro mobile transceivers as the small cell base station transceiver uses for communicating with small cell mobile transceivers.

The apparatus of the macro cell base station transceiver can be further operable to introduce a time gap, in which radio signals are neither received nor transmitted, when switching from transmitting to receiving the radio signals, while the apparatus of the small cell base station transceiver is further operable to introduce a shorter or no time gap, in which radio signals are neither received nor transmitted, when switching from transmitting to receiving the radio signals. In other words, the gap introduced by the macro base station transceiver when switching from the DL to UL is larger than the gap introduced by the small cell base station transceiver or the small cell base station transceiver does not introduce a gap at all. The small cell base station transceiver may then make use of the reduced interference in the silence period of the macro cell base station transceiver. The above system may therefore provide the advantage of improved interference coordination in a Heterogeneous Network (HetNet) configuration.

Embodiments further provide a method for communicating in a wireless communication system. The method comprises transmitting radio signals on a first carrier during a first time interval and transmitting radio signals on a second carrier during a second time interval. The method further comprises receiving radio signals on the second carrier during the first time interval and receiving radio signals on the first carrier during the second time interval.

Embodiments may further provide a computer program having a program code for performing one of the above-described methods, when the computer program is executed on a computer or processor.

### Brief Description of the Figures

Some other features or aspects will be described using the following non-limiting embodiments of apparatuses and/or methods and/or computer programs by way of example only, and with reference to the accompanying Figures, in which
- Fig. 1: illustrates an embodiment of an apparatus for communicating;
- Fig. 2: illustrates an embodiment with alternating TDD on paired spectrum;
- Fig. 3: shows an example of a timing diagram of an embodiment;
- Fig. 4: shows another example of a timing diagram of an embodiment;
- Fig. 5: depicts the use of a macro layer gap for interference reduction in an embodiment of a HetNet; and
- Fig. 6: shows a block diagram of an embodiment of a method for communicating.

### Description of Some Embodiments

Various embodiments will now be described in more detail with reference to the accompanying drawings. In the figures, the thicknesses of lines, layers and/or regions may be exaggerated for clarity.

Accordingly, while embodiments are capable of various modifications and alternative forms, embodiments thereof are shown by way of example in the figures and will herein be described in detail. It should be understood, however, that there is no intent to limit embodiments to the particular forms disclosed, but on the contrary, embodiments are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

In the following description some components will be displayed in multiple figures carrying the same reference signs, but may not be described multiple times in detail. A detailed description of a component may then apply to that component for all its occurrences.

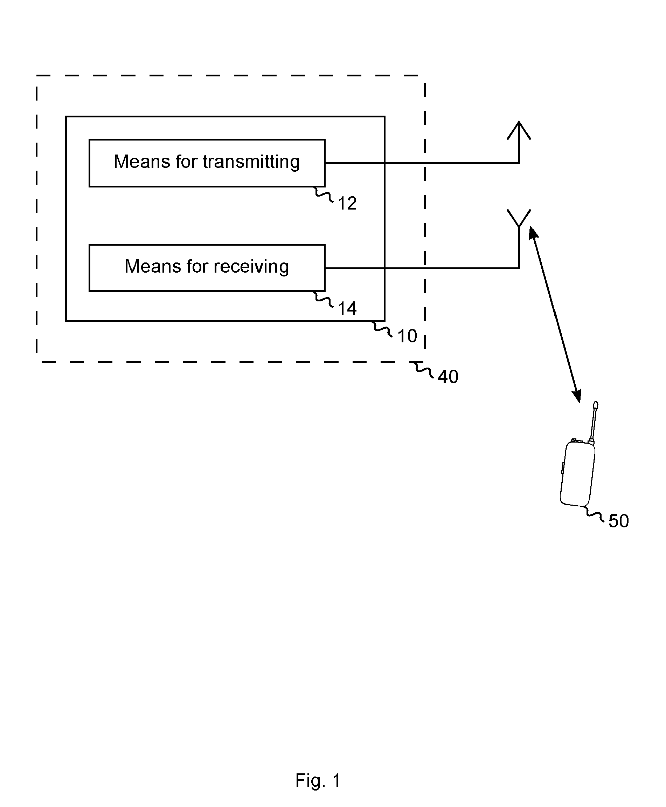

Fig. 1 illustrates an embodiment of an apparatus 10 for communicating in a wireless communication system. In the embodiment the wireless communication system is assumed to be an LTE-system. As shown in Fig. 1, the apparatus 10 comprises means for transmitting 12 radio signals on a first carrier during a first time interval and for transmitting radio signals on a second carrier during a second time interval. Moreover, the apparatus 10 comprises means for receiving 14 radio signals on the second carrier during the first time interval and for receiving radio signals on the first carrier during the second time interval. The means for transmitting 12 can be coupled to the means for receiving 14. Fig. 1 further illustrates that the means for transmitting 12 is coupled to a transmit antenna and that the means for receiving 14 is coupled to a receive antenna. In other embodiments, the means for transmitting 12 and the means for receiving 14 may be coupled to the same antenna. In other words, in some embodiments the same antenna may be used as transmit and receive antenna.

As has been described above, in embodiments the apparatus 10 can be comprised in different network entities or network nodes. For example, the apparatus 10 can be comprised in a base station transceiver, a mobile transceiver, or a relay station transceiver. In the following embodiment it can be assumed that the apparatus 10 is comprised in a base station transceiver 40 communicating with a mobile station transceiver 50. In this embodiment it is also assumed that the mobile transceiver 50 comprises an embodiment of the apparatus 10.

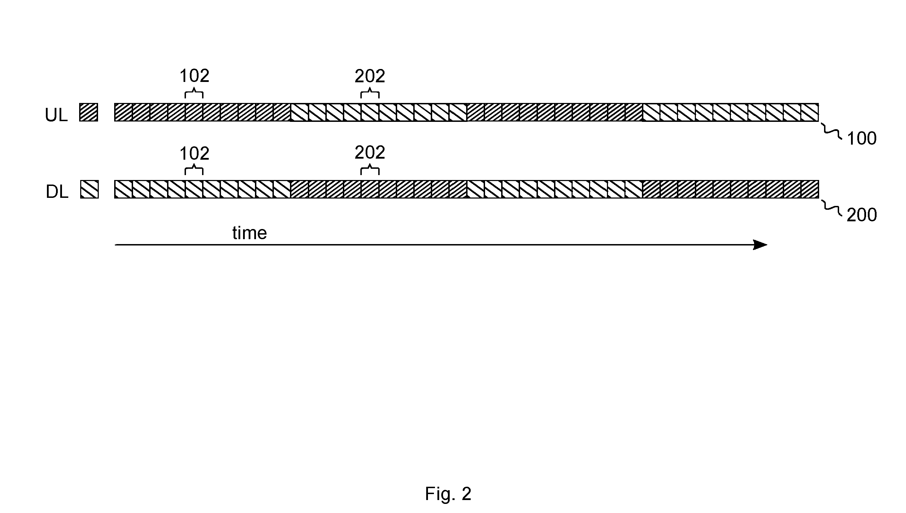

Fig. 2 further illustrates an exemplified time line of the embodiment. In other words Fig. 2 illustrates an embodiment with alternating TDD on paired spectrum. Fig. 2 shows the first carrier 100 and the second carrier 200. On both carriers transmission is organized in repetitive radio frames. In the present embodiments the time intervals, i.e. the first time interval 102 and the second time interval 202, refer to particular radio frames or sub-frames. In the present embodiment the first time interval 102 and the second time interval 202 are non-overlapping. In other embodiments they may overlap to some extent. Moreover, it is assumed that the first carrier 100 and the second carrier 200 extent across non-overlapping spectral regions. Unless stated otherwise, these assumptions also apply to subsequent embodiments. Fig. 2 illustrates a multiplicity of radio frames on each carrier. It is to be noted that in other embodiments other time scales may be used, for example, transmissions may be subdivided in radio frames, sub-frames, slots, Time Transmission Intervals (TTIs), symbols, etc., which all correspond to different time intervals.

Fig. 2 shows that the means for transmitting 12 and the means for receiving 14 are operable in a time division duplex mode and in a frequency division duplex mode. Fig. 2 uses different hachures to illustrate uplink and downlink transmissions. For example, Fig. 2 can be interpreted from the perspective of a base station transceiver 40 or from a mobile transceiver 50. From the hachures in Fig. 2 it can be seen that the means for transmitting 12 is operable to switch between transmission on the first carrier 100 and transmission on the second carrier 200. Moreover, the means for receiving 14 is operable to switch between receiving on the first carrier 100 and receiving on the second carrier 200.

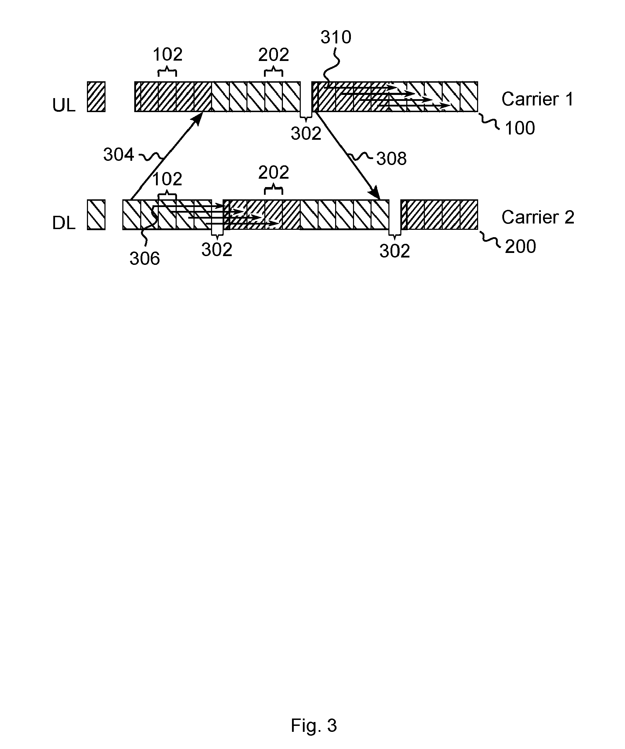

Fig. 3 illustrates another example of a timing diagram of an embodiment. In Fig. 3 the apparatus 10 is operable to switch between transmitting and receiving radio signals on each of the two carriers 100 and 200. The apparatus is further operable to introduce a time gap 302, in which radio signals are neither received nor transmitted, when switching from transmitting to receiving. This implies that the embodiment depicted in Fig. 3 is still seen from the perspective of a base station transceiver 40, where the downlink direction corresponds to transmission and the uplink direction corresponds to reception. In the embodiment illustrated in Fig. 3 it is assumed that there is no gap between receiving, i.e. uplink, and transmitting, i.e. downlink. As can be seen from the figure the time gaps 302 are introduced on both carriers 100 and 200.

In other embodiments time gaps 302 may also be introduced when switching from receiving to transmitting. Moreover, in the present embodiment hybrid ARQ is assumed for downlink transmission. I.e. from the perspective of the base station transceiver 40, the means for transmitting 12 is operable to transmit a payload data packet on the first carrier 100 and the means for receiving 14 is operable to receive an acknowledgement data packet associated with the payload data packet on the second carrier 200. The same holds in the opposite direction, i.e. the means for transmitting 12 is operable to transmit a payload data packet on the second carrier 200 and the means for receiving 14 is operable to receive an acknowledgement data packet associated with the payload data packet on the first carrier 100.

This is illustrated in Fig. 3 by the arrow 304. This arrow 304 illustrates, that the hybrid ARQ may be used across multiple carriers. For example, the subdivision in Fig. 3 along the time line, i.e. to the right, may correspond to different sub-frames. The time between transmission of a payload data packet and reception of the associated acknowledgement data packet is assumed to be 4 sub-frames. During the first sub-frame the means for transmitting 12 transmits the payload data packet in the downlink on the second carrier 200. 4 sub-frames later, switching of transmitting and receiving has not yet been carried out, i.e. reception is still on the first carrier 100. Hence, the acknowledgement data packet is received on the first carrier 100. As Fig. 3 further illustrates, another payload data packet may be transmitted in the second sub-frame on the second carrier 200 indicated by the origin of arrow 306. As 4 sub-frames later switching has occurred, the acknowledgement data packet for the payload data packet is received on the same carrier 200.

Similar considerations may apply in the uplink. In other words, the means for receiving 14 is operable to receive a payload data packet on the first carrier 100 and the means for transmitting 12 can be operable to transmit an acknowledgement data packet associated with the payload data packet on the second carrier 200. The situation is illustrated by the arrow 308 in Fig. 3. In other words, a payload data packet is received in the uplink by the base station transceiver on the first carrier 100. HARQ is also used in the uplink and hence 4 sub-frames later an acknowledgement data packet is transmitted. As no switching occurs between the reception of the payload data packet and the transmission of the corresponding acknowledgement packet arrow 308 indicates that the payload data packet is received on carrier 100 while the acknowledgement data packet is transmitted on carrier 200. Consequently, the arrow 310 illustrates the other situation, where a payload data packet is received in the uplink but four sub-frames later switching has occurred. Hence while carrier 100 was used for reception, when the payload data packet was received, it is now used for transmission as indicated by the arrow 310. Hence, the acknowledgement data packet is transmitted on the same carrier 100.

Fig. 3 illustrates the embodiment in more detail, including the ACK/NACK reporting using the respective arrows. Moreover, it is assumed that a transmission gap is spared for downlink-uplink switching as indicated by the transmission gap 302. Uplink-downlink switching is assumed to be without a gap, which is for simplicity reasons in the present embodiment. As it has already been pointed out above in other embodiments there may as well be a transmission gap for uplink to downlink switching. The embodiment can in so far be seen as similar to a macro-cellular TDD concept in LTE.

Moreover, in the embodiment of Fig. 3 a downlink to uplink switching-point periodicity of 10 sub-frames is assumed, which can be seen primarily to limit aging effects on the channel state information. Moreover, the embodiment depicted in Fig. 3 shows an almost symmetric allocation of uplink and downlink sub-frames, i.e. 5 downlink sub-frames and 4 uplink sub-frames. Furthermore, the acknowledgement data packet ACK/NACK in response to a received payload data packet is transmitted with 4 sub-frames delay, either on the same carrier, cf. arrows 306 and 310, or on paired carrier, cf. arrows 304 and 308. Moreover, in the embodiment depicted in Fig. 3 it is assumed that an Uplink Pilot Time Slot (UpPTS) is used to convey the uplink acknowledgement data packet ACK/NACK. In other words, the acknowledgement data packet is transmitted or received as part of a shortened sub-frame. Generally speaking, in the present embodiment ACK/NACK transmission is mapped onto carrier 1 (100) or carrier 2 (200) so as to minimize the time from transmitting a payload data packet until ACK/NACK is received. With asymmetric uplink downlink allocation also one of multiple carriers may be used. In such embodiments mapping rules may be defined or be configurable.

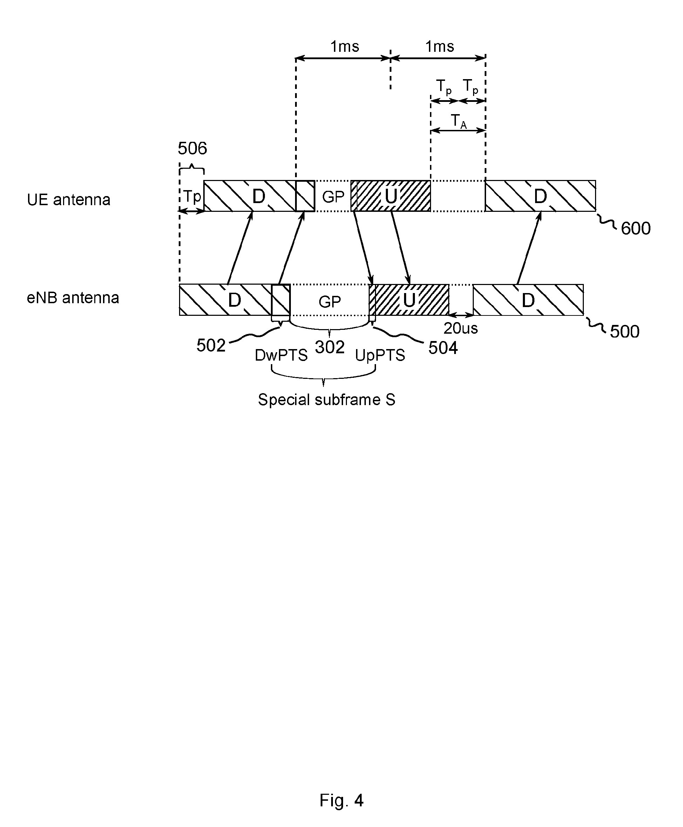

Fig. 4 illustrates another example of a timing diagram in an embodiment. The timing diagram of Fig. 4 may correspond to an LTE TDD operation in an embodiment. It is to be noted that Fig. 4 illustrates transmissions only for one carrier but from the perspective of the base station transceiver antenna, i.e. an eNodeB antenna and from the perspective of the mobile transceiver antenna, i.e. the User UE antenna. The signal at the base station transceiver antenna is indicated by the diagram 500 and the corresponding signal at the UE antenna is indicated by diagram 600. Downlink (also marked as "D") and uplink (also marked as "U") transmissions, receptions, respectively, are distinguished by different hachures in Fig. 4.

The diagram 500 illustrates the Downlink Pilot Time Slot (DwPTS) 502 and the UpPTS 504. Moreover the transmission gap (GP) 302 is illustrated by the diagram 500. Moreover the propagation delay is illustrated in Fig. 4 by the time period T_{P} 506. Hence transmissions from the base station transceiver are delayed by T_{P} before they are received at the mobile transceiver. Moreover, diagram 600 illustrates that the gap at the mobile transceiver between switching from reception to transmission is shorter than at the base station transceiver. The diagram 500 also illustrates that the gap when switching from reception, i.e. uplink, to transmission, i.e. downlink, is only 20 µs. The corresponding gap at the mobile transceiver, as shown in diagram 300, is longer.

Fig. 4 also illustrates the timing advance T_{A}, which is used at the mobile transceiver to delay transmission and reception as indicated in diagram 600. In the present embodiment, the timing advance T_{A} corresponds to twice the propagation delay T_{P} plus the 20µs. This is due to the fact that the signals need T_{P} time to travel from the mobile transceiver to the base station transceiver; the base station transceiver needs some time to process the signals and then the signals need another propagation delay T_{P} to travel back from the base station transceiver to mobile transceiver.

In further embodiments the apparatus can comprise means for estimating a radio channel between the apparatus and another transceiver of the wireless communication system. As the above description and the corresponding figures show, the radio channel occurs on different carriers, for example, between a mobile transceiver and a base station transceiver. In some embodiments the means for estimating can be operable to determine a transmit quality measure for a radio channel of the first carrier 100 or the second carrier 200 by determining a quality measure of a received reference symbol. For example, the TDD component may be used together with the reciprocity of the radio channel. In other words, for as long as the switching is carried out faster than the coherence time of the radio channel, uplink estimations can be used in the downlink and vice versa.

In other embodiments the means for estimating can be operable to determine a transmit quality measure for a radio channel of the first carrier or the second carrier by receiving quality information from the other transceiver. In other words in some embodiments a reference symbol may be received and the channel quality may be estimated based on the received reference symbol. Information on the channel quality may then be used to determine a pre-coding coefficient for the transmission, or may be transmitted back to the transmitter of the reference symbol. If the switching occurs fast enough, then the channel quality determined based on the received reference symbol may also be applied in the opposite direction. In other words, in some embodiments, when the switching is carried out fast enough, no Channel Quality Information but only data and reference symbols may be transmitted from both sides such that the other side can estimate both channels making use of reciprocity. If the switching takes longer than the coherence time of the channel, then additional information on the channel quality may be exchanged or communicated between the two transceivers.

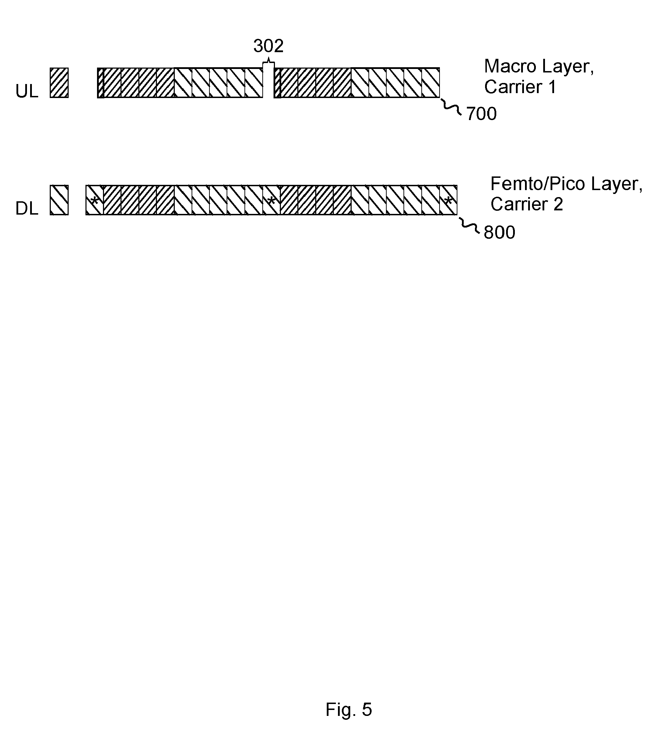

Embodiments may further provide a system comprising macro cell base station transceiver with an above described apparatus 10 and a small cell base station transceiver with an apparatus 10 according to the above description. A time line for such an embodiment is illustrated in Fig. 5. Fig. 5 illustrates two diagrams 700 and 800. The diagram 700 illustrates the transmission and reception behavior of the macro layer base station transceiver. The diagram 800 illustrates the transmission and reception behavior of a femto or pico layer base station transceiver. It is assumed that both, the macro base station transceiver and the small cell base station transceiver transmit on the same carrier. The macro cell base station transceiver is operable to switch between transmitting radio signals on the carrier using its means for transmitting 12 and receiving radio signals on the same carrier using the means for receiving 14. The same is carried out by the small cell base station transceiver. The switching is indicated by the different hachures in Fig. 5.

Moreover, the macro cell base station transceiver is further operable to introduce a time gap 302, in which radio signals are neither received nor transmitted, when switching from transmitting, i.e. from downlink, to receiving, i.e. to uplink. At the same time the small cell base station transceiver is operable to introduce a shorter or even no time gap in which radio signals are neither received nor transmitted, when switching from transmitting to receiving the radio signals. This is illustrated in Fig. 5 by the diagram 700 of the macro base station transceiver having the time gap 302 where the diagram 800 of the femto/pico base station transceiver does not show this gap. During the gap, macro base station transmissions are suspended, such that no interference is generated for the small cell base station transceiver. The present embodiment therefore addresses a HetNet scenario, wherein the small cell base station transceiver is located within the coverage of the macro base station transceiver.

Embodiments may provide a further virtue in that the transmission gaps can be coordinated on the component carriers. For example, transmission gaps may be present on each of the component carriers that may be used for interference mitigation to other cells or layers, for example, pico or femto layers in line with Fig. 5. In Fig. 5 for simplicity reasons it is further assumed that no transmission gaps are required on small cell layers, i.e. a very short transmission gap or for example 1µs, which correspond to 0.1% of the LTE time transmission interval, suffices to enable a cell radius of approximately 150 m. In other words, the propagation delay as it was illustrated in Fig. 4, would not have to be considered as much for a small cell, as its coverage or radius is significantly smaller than that of a macro cell base station transceiver. Furthermore, it is to be noted that Fig. 2 and 3 assume a 0-propagation delay, i.e. T_{P}=0, for simplicity reasons. Fig. 4 illustrates a propagation delay T_{P}>0.

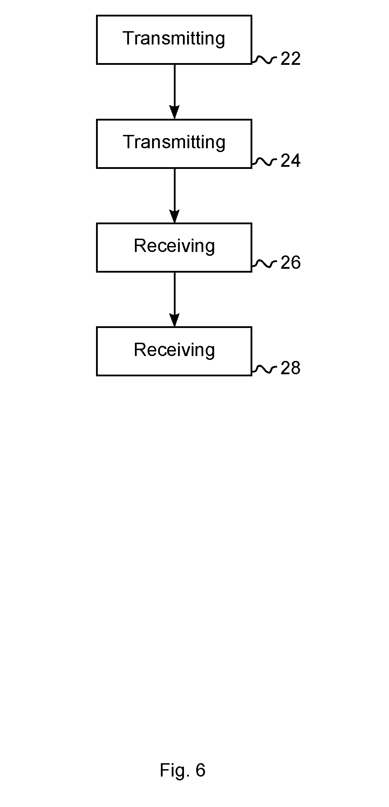

Fig. 6 shows a block diagram of an embodiment of a method for communicating in a wireless communication system. The method comprises a step of transmitting 22 radio signals on a first carrier 100 during a first time interval 102. The method comprises a further step of transmitting 24 radio signals on a second carrier 200 during a second time interval 202. The method further comprises a step of receiving 26 radio signals on the second carrier 200 during the first time interval 102 and receiving 28 radio signals on the first carrier 100 during the second time interval 202.

Further embodiments provide a computer program having a program code for performing one of the above methods when the computer program is executed on a computer or processor.

Embodiments may increase the performance gain of advanced transmission modes like CoMP, beamforming, etc. without increasing the required feedback information. Embodiments may provide performance gains for advanced transmission modes in TDD systems and paired spectrum.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as magnetic disks and magnetic tapes, hard drives, or optically readable digital data storage media. The embodiments are also intended to cover computers programmed to perform said steps of the above-described methods or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for transmitting", "means for receiving", "means for estimating", etc., may be provided through the use of dedicated hardware, such as "a transmitter", "a receiver" , "an estimator", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. An apparatus (10) for communicating in a wireless communication system, the apparatus 10 comprising
means for transmitting (12) radio signals on a first carrier (100) during a first time interval (102) and for transmitting radio signals on a second carrier (200) during a second time interval (202); and
means for receiving (14) radio signals on the second carrier (200) during the first time interval (102) and for receiving radio signals on the first carrier (100) during the second time interval (202).

2. The apparatus (10) of claim 1, wherein the means for transmitting (12) and the means for receiving (14) are operable in a time division duplex mode and in a frequency division duplex mode.

3. The apparatus (10) of claim 1, wherein the means for transmitting (12) is operable to switch between transmission on the first carrier (100) and transmission on the second carrier (200).

4. The apparatus (10) of claim 3, wherein the means for receiving (14) is operable to switch between receiving on the first carrier (100) and receiving on the second carrier (200).

5. The apparatus (10) of claim 1, further comprising means for estimating a radio channel between the apparatus (10) and another transceiver of the wireless communication system.

6. The apparatus (10) of claim 5, wherein the means for estimating is operable to determine a transmit quality measure for a radio channel of the first carrier (100) or the second carrier (200) by determining a quality measure of a received reference symbol and/or wherein the means for estimating is operable to determine a transmit quality measure for a radio channel of the first carrier (100) or the second carrier (200) by receiving quality information from the other transceiver.

7. The apparatus (10) of claim 1, being operable to switch between transmitting radio signals on at least one of the first carrier (100) or the second carrier (200) using the means for transmitting (12) and receiving radio signals on the at least one of the first carrier (100) or the second carrier (200) using the means for receiving (14), wherein the apparatus (10) is further operable to introduce a time gap (302), in which radio signals are neither received nor transmitted, when switching from transmitting to receiving or when switching from receiving to transmitting.

8. The apparatus (10) of claim 1, wherein the means for receiving (14) is operable to receive a payload data packet on the first carrier (100) and wherein the means for transmitting (12) is operable to transmit an acknowledgement data packet associated with the payload data packet on the second carrier (200).

9. The apparatus (10) of claim 1, wherein the means for transmitting (12) is operable to transmit a payload data packet on the first carrier (100) and wherein the means for receiving (14) is operable to receive an acknowledgement data packet associated with the payload data packet on the second carrier (200).

10. The apparatus (10) of one of the claims 8 or 9, wherein the acknowledgement data packet is transmitted or received as part of a shortened sub-frame.

11. A base station transceiver (40) or a relay station transceiver of a wireless communication system comprising the apparatus (10) of claim 1.

12. A mobile transceiver (50) of a wireless communication system comprising the apparatus (10) of claim 1.

13. A system comprising a macro cell base station transceiver with the apparatus (10) of claim 1 and a small cell base station transceiver with the apparatus (10) of claim 1, wherein the macro cell base station transceiver is operable to switch between transmitting radio signals on at least one of the first carrier (100) or the second carrier (200) using the means for transmitting (12) and receiving radio signals on the at least one of the first carrier (100) or the second carrier (200) using the means for receiving (14), and wherein the small cell base station transceiver is operable to switch between transmitting radio signals on at the least one of the first carrier (100) or the second carrier (200) using the means for transmitting (12) and receiving radio signals on the at least one of the first carrier (100) or the second carrier (200) using the means for receiving (14), wherein the apparatus (10) of the macro cell base station transceiver is further operable to introduce a time gap (302), in which radio signals are neither received nor transmitted, when switching from transmitting to receiving the radio signals, while the apparatus (10) of the small cell base station transceiver is further operable to introduce a shorter or no time gap, in which radio signals are neither received nor transmitted, when switching from transmitting to receiving the radio signals.

14. A method for communicating in a wireless communication system, the method comprising
transmitting (22) radio signals on a first carrier (100) during a first time interval (102);
transmitting (24) radio signals on a second carrier (200) during a second time interval (202);
receiving (26) radio signals on the second carrier (200) during the first time interval (102); and
receiving (28) radio signals on the first carrier (100) during the second time interval (202).

15. A computer program having a program code for performing the method of claim 14, when the computer program is executed on a computer or processor.
